# EUROPEAN PATENT SPECIFICATION

(11) **EP 2 151 379 B1**
(45) Date of publication and mention of the grant of the patent: **12.03.2014**
(21) Application number: 09161737.3
(22) Date of filing: 02.06.2009
(51) Int. Cl.: B64C 27/20, B64C 39/02

(54) **Modular pods for use with an unmanned aerial vehicle**
Modulare Behälter zur Verwendung mit einem unbemannten Luftfahrzeug
Nacelles modulaires pour une utilisation avec un véhicule aérien sans pilote

(30) Priority: 06.08.2008 US 186693
(43) Date of publication of application: 10.02.2010
(73) Proprietor: Honeywell International Inc., Morristown, NJ 07962 (US)
(72) Inventor: Collette, Daniel Ross, Morristown, NJ 07962-2245 (US); Helsing, JR., Joseph Scott, Morristown, NJ 07962-2245 (US)
(74) Representative: Buckley, Guy Julian

(56) References cited:
- FR-A1- 2 871 136
- US-A1- 2006 192 047
- US-A1- 2008 054 121

## Description

### FIELD

The present invention relates generally to unmanned aerial vehicles. More particularly, the present invention relates to modular pods for use with an unmanned aerial vehicle.

### BACKGROUND

Unmanned aerial vehicles ("UAVs") are remotely piloted or self-piloted aircraft that can carry cameras, sensors, communications equipment, or other payloads. A UAV is capable of controlled, sustained, level flight and is powered by either a jet or an engine. The UAVs may be remotely controlled or may fly autonomously based on pre-programmed flight plans or more complex dynamic automation systems.

UAVs have become increasingly used for various applications where the use of manned flight vehicles is not appropriate or is not feasible. Such applications may include military situations, such as surveillance, reconnaissance, target acquisition, data acquisition, communications relay, decoy, harassment, or supply flights. These vehicles are also used in a growing number of civilian applications, such as firefighting when a human observer would be at risk, police observation of civil disturbances or crime scenes, reconnaissance support in natural disasters, and scientific research, such as collecting data from within a hurricane.

Currently, a wide variety of UAV shapes, sizes, and configurations exist. Typically it is the payload of the aircraft that is the desired product, not the aircraft itself. A payload is what the aircraft is carrying. UAVs are the delivery system for a payload and are developed to fill a particular application and a set of requirements. As previously mentioned, there are numerous applications for which a UAV may be used. For each new application, a different type of payload may be used. Because different payloads may require different processing capabilities, or may comprise different sizes, a variation of the UAV typically must be developed for each type of payload, or a completely new aircraft typically must be designed. Designing a new aircraft or developing a variation of the current UAV in use is time-consuming and costly.

U.S. Patent Publication No. 2006/0192047 Al to Goossen discloses a dual ducted fan arrangement in which the duct components, engine, and avionics/payload pods are capable of being quickly disassembled to fit within common backpacking systems.

FR-A-2,871136 discloses an unmanned VTOL vehicle. Here, a pair of counter-rotating propellers rotate within an annular fairing such that almost all induced gyroscopic torque is cancelled.

### SUMMARY

The present invention in its various aspects is as set out in the appended claims.

A first surface on the core frame of the vehicle comprises a plurality of attachments.

These attachments could be electric or mechanical connects. The plurality of attachments are used to attach pods carrying various payloads. Locking mechanisms located on the vehicle's engine supports may also attach to the pods to maintain the pods in the proper position during flight. Once the pods are connected to the vehicle frame, the vehicle flies to its destination. After the unmanned aerial vehicle has completed the flight, the vehicle lands and the pods may be removed and unloaded. The same pods may later be re-attached to the frame. Alternatively, if new pods carrying various other payloads are desired for another operation, the new pods may be attached to the first surface of the frame. The pods may be shaped so that the leading edge of each pod enhances the aerodynamics of the vehicle while in flight. When the pods are attached to the frame, each pod forms part of the exterior surface of the vehicle and the aerodynamic shape of the pod aids in the operation of the vehicle during flight.

Pods that may be removed and exchanged from a core ducted fan gives a UAV versatility. A wide variety of payloads may be delivered using the same UAV, simply by removing and attaching different pods to the same vehicle core. This allows for greater manufacturing simplicity, as only a single type of unmanned aerial vehicle need be constructed. Costs may be decreased as well, as the storage and maintenance of a plurality of different types of unmanned aerial vehicles is no longer necessary.

This vehicle will provide intelligence on enemy activity without unduly risking the lives of human pilots or ground reconnaissance teams. For civilian use, the vehicle could be used by law enforcement for surveillance on SWAT operations.

### BRIEF DESCRIPTION OF THE DRAWINGS

Various embodiments are described herein with reference to the following drawings. Certain aspects of the drawings are depicted in a simplified way for reason of clarity. Not all alternatives and options are shown in the drawings and, therefore, the invention is not limited in scope to the content of the drawings. In the drawings:
Figure 1 is a perspective view of a core vehicle ducted fan according to one embodiment of the invention;
Figure 2a is a perspective view of an exemplary avionics pod;
Figure 2b is a perspective view of an exemplary payload pod;
Figure 2c is a perspective view of an exemplary common fuel pod;
Figure 3 is a perspective view of four exemplary pods attached to each other having a shape in accordance with an exemplary embodiment;
Figure 4a is a perspective view of the ducted fan of Figure 1 with attached pods and landing feet attached; and
Figure 4b is a side view of the ducted fan of Figure 4a.

### DETAILED DESCRIPTION

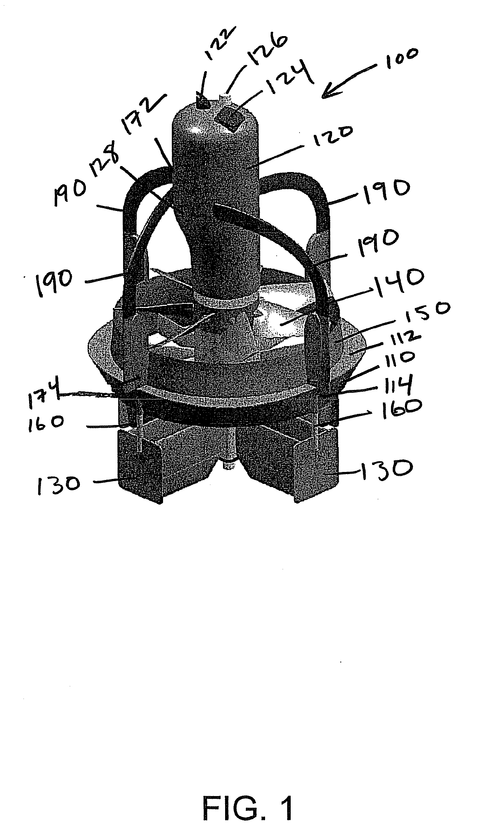

FIG. 1 depicts a perspective view of a ducted fan core 100 according to one embodiment of the present invention. Ducted fan core 100 is provided for use as an unmanned aerial vehicle.

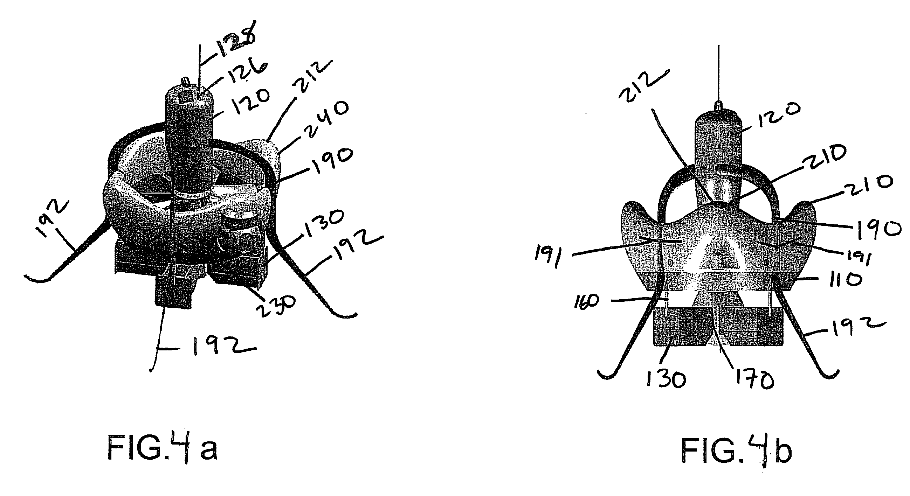

Ducted fan core 100 comprises a frame 110, an engine 120, a plurality of control vanes 130, a fan 140, a duct portion 150, a plurality of bars 160, a plurality of actuators 170 (shown in Figure 4b), a gearbox assembly (not shown), and a plurality of engine supports 190. Engine 120 comprises an exhaust port 122, a light 124, and an antenna holder 126. Frame 110 comprises a first surface 112. Each of the plurality of engine supports 190 comprises a first end 172 and a second end 174.

Fan 140 is mounted within duct portion 150. Duct portion 150 is attached to frame 110, extending through frame 110 as shown in Figure 1. Engine 120 may be attached to fan 140. Second end 174 of each of the plurality of engine supports 190 is attached to first surface 112 of frame 110 and first end 172 of each of the plurality of engine supports 190 is attached to engine 120. Each of the plurality of actuators 170 is attached to each of the plurality of control vanes 130. Each of the plurality of control vanes 130 is attached to frame 110 with a bar of the plurality of bars 160. Each of the plurality of control vanes is also attached to each of the plurality of actuators 170. The gearbox assembly is attached to engine 120.

Frame 110 may be manufactured as part of duct portion 150. Alternatively, frame 110 may be manufactured separately from duct portion 150 and may be attached to duct portion 150. Frame 110 may be attached to duct portion 150 with a cement or glue. Alternatively, frame 110 may be attached to duct portion 150 mechanically. Frame 110 may be manufactured from metal. Alternatively, frame 110 may be manufactured from a durable plastic or other material. First surface 112 of frame 110 may be a substantially flat surface. First surface 112 may comprise both electric and mechanical connects. First surface 112 may be a printed circuit board ("PCB") or may have embedded electrical traces. Ribbon or edge connectors or a printed circuit board edge may be used. Alternatively, first surface 112 may comprise a fuel line quick-disconnect fitting. The plurality of engine supports 190 may be affixed to first surface 112. Frame 110 may comprise a plurality of indents 114, as shown in Figure 1. Second end 174 of an engine support may be inserted into an indent of the plurality of indents, affixing engine support 190 to frame 110. Alternatively, frame 110 may not have any indents, and each engine support 190 may be affixed to first surface 112 of frame 110.

Engine 120 may be a turbine engine. Alternatively, engine 120 may be a number of other engine types. Engine 120 may be offset to one side of the frame center to allow for the vehicle center of gravity to be adjusted. In Figure 1, for example, a portion 128 of engine 120 is offset to the right of the frame. Exhaust port 122 serves as an opening to allow exhaust fumes to exit the engine. Light 124 is preferably lit while the fan is in operation, and serves to alert other vehicles in the air as well as control centers of the location of the UAV. Although only one light 124 is shown, more lights, or other signaling devices, may be present on the vehicle. Additionally, the location of light 124 may be in a different location than that shown in Figure 1. Light 124 may blink. Alternatively, light 124 may remain on throughout the vehicle's entire flight. The gearbox assembly may be mounted to engine 120.

The plurality of engine supports 190 serves to support engine 120 within frame 110. A first end 172 of each engine support may be attached to engine 120. Although four engine supports 190 are shown in Figure 1, other numbers of engine supports may be used. Alternatively, second end 174 may be attached to a different part of frame 110.

Each bar of the plurality of bars 160 extends between the frame 110 and each of the control vanes 130, and is attached to a control vane. The plurality of bars 160 may be mechanically attached to the control vanes. The plurality of bars 160 may be made from a metal or a durable plastic. The plurality of bars 160 serves to stabilize the plurality of control vanes 130. The plurality of bars 160 may alternatively be part of the frame 110.

The UAV may be designed to be transported in a backpack. A modular lightweight load carrying equipment pack ("MOLLE") is an army and marine corps backpack. The MOLLE pack is a fully integrated, modular load bearing system consisting of a load bearing vest with butt pack, main ruck with sustainment pouches and sleeping bag compartment attached to an external frame. There is also a patrol pack, which can be used separately or combined with the main ruck for added load carrying capability. MOLLE can be configured in several different variations to fit the load handling needs of the mission. The load-bearing vest is typically worn and holds pockets for magazines and hand grenades. Although ducted fan core 100 is preferably designed to fit within a MOLLE pack, ducted fan core 100 may fit into a number of other bags or backpacks. Ducted fan core 100 may be used in non-military applications, and might not be housed within a pack for those applications.

The ducted fan core 100 may weigh approximately 2.7 to 3.6 kg (6-8 lbs). However, ducted fan core 100 may weigh more or less than this value, depending on materials used and size. The UAV may operate at altitudes of 30 to 150 m (100 to 500 feet) above ground level, and typically the UAV will fly between 3 and 150 m (10 and 500 feet) above the ground. The UAV can provide forward and down-looking day or night video or still imagery. The UAV may operate in a variety of weather conditions including rain and moderate winds. The system requires minimal operator training. Portable ground stations may be used to guide the aircraft and receive images from the cameras. The ground station can be used to program a flight path for the UAV or control it manually. The aircraft can also be equipped with electro-optical cameras for daylight operations or infrared cameras for night missions.

The UAV may run autonomously, executing simple missions such as a program or reconnaissance, or it may run under the control of a crew. The crew may comprise a pilot and sensor operators. The pilot may drive the aircraft using controls that transmit commands over a C-band line-of-sight data link, or a Ku-Band satellite link. The aircraft may receive orders via an L-3 Com satellite data link system.

The pilots and other crew members use images and radar received from the aircraft to make decisions regarding control of the UAV.

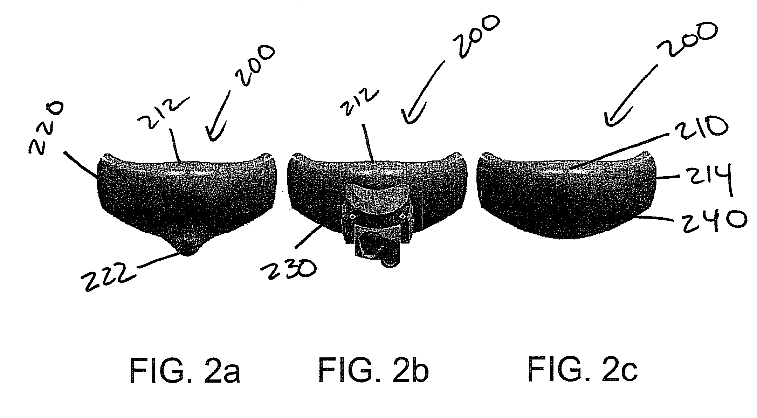

Figures 2a-2c illustrate exemplary pods 200 that may be attached to ducted fan core 100. Each pod comprises a leading edge 210. A leading edge is a line connecting the forward-most points of the pod's profile; it is the front edge of the pod. When an aircraft moves forward, the leading edge is that part that first contacts the air. The leading edge may be perpendicular to the airflow, in which case it is called a straight wing. The leading edge may meet the airflow at an angle, in which case it is referred to as a swept wing. Leading edge 210 of pod 200 may be shaped to enhance the aerodynamic aspects of the UAV. For example, leading edge 210 may comprise a convex curve 212. When pod 200 is attached to frame 110 and the unmanned aerial vehicle is flying, air will hit leading edge 210 and flow in a desired direction so as to enhance the airspeed of the vehicle and minimize the obstruction of air hitting the vehicle. In addition, the shape of each pod 200 is such that when the pods are affixed to frame 110, the pods form an exterior portion of the UAV. A portion of the pod may comprise an indent (not shown) on the internal surface of outer shell 214 near the pod base so that when the pod base is attached to first surface 112, the indented portion of the pod sits against duct portion 150 and the non-indented portion of the internal surface is flush with duct portion 150. This allows for pod 200 to be integral with duct portion 150.

Air may flow over both the external surface of outer shell 214 and the internal surface of outer shell 214. The internal surface of outer shell 214 may be shaped so that as air hits the leading edge, the air flows down and is guided along the internal surface to then impact fan 140.

Each pod 200 is a module. A module is a self-contained component of a system, which has a well-defined interface to the other components. Pods 200 can be interchanged as units without disassembly of the pod itself. Pod 200 comprises an outer shell 214 and an interior (not shown). The interior of each pod 200 functions as a container, and contains a payload. The payload, or carrying capacity, of each pod may vary. In an unmanned aerial vehicle, the payload may carry equipment or instruments, for example. More specifically, for example, pod 200 may contain cameras, fuel, gas, or electronics. A variety of pods may be used with a UAV. Figure 2a illustrates a perspective view of an avionics pod 220. Avionics pod 220 may be used to carry avionics equipment, such as cameras, a laser designer, a range finder, or supplies. Avionics pod 220 may comprise an extension 222 to accommodate mission specific electronics. Payload pod 230 may be used to carry integrated flight management for the purpose of an application designed for the pod, i.e. surveillance. Common fuel pod 240 may be used to carry fuel. Pod 200 may carry payloads comprising cameras for the purpose of taking photographs or to videotape the ground below the vehicle's flight path.

Pod 200 is not necessarily limited for use with an unmanned aerial vehicle. Pod 200 may also be used with a terrestrial vehicle. For example, after pod 200 is detached and removed from the UAV, pod 200 may be attached to a terrestrial vehicle before arriving at the desired destination. Pod 200 may be attached to the terrestrial vehicle using the same attachment mechanisms as used for attachment to a UAV.

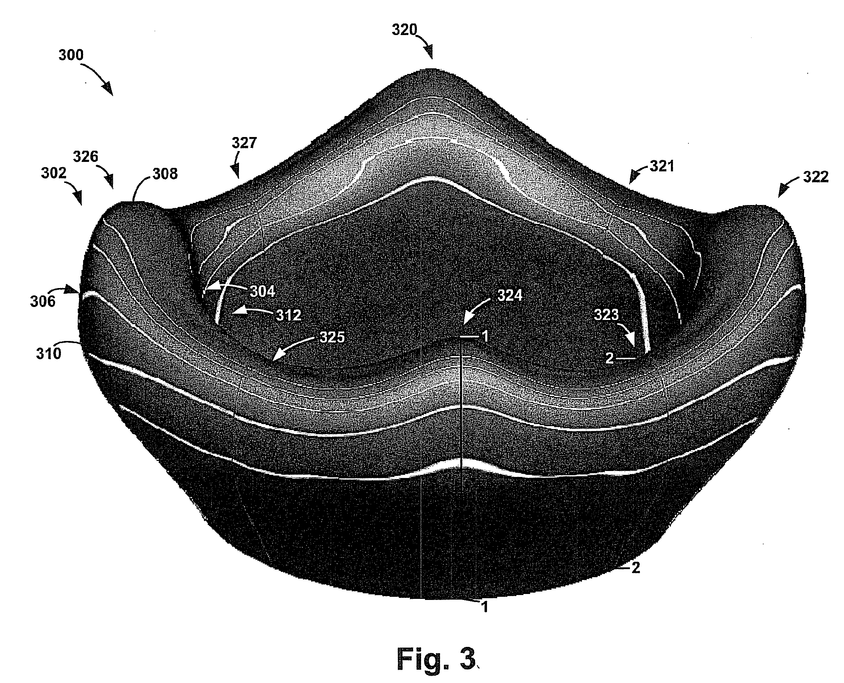

Four attached pods having a shape in accordance with an exemplary embodiment may be described by reference to Figure 3. Although Figure 3 shows four pods attached to each other, when attached to a UAV the pods may instead be attached to engine supports 190, as shown in Figure 4. When attached as shown in Figure 3, pods 300 form a circumference. As depicted in Figure 3, each pod 300 has a lip 302. Lip 302 comprises an internal lip portion 304 and an external lip portion 306. A cross-section of a pod may be taken at the line depicted by 1-1, which is a cross-section at a wide portion of pod 300. A cross-section could also be taken at the line depicted by 2-2, which is a cross-section at a narrow portion of the pod. Alternatively, a cross-section could be taken at any other point along the circumference of the attached pods.

Each pod cross-section includes a lip highlight location 308 and a location 310 of maximum radial distance. Lip highlight location 308 is the forward-most point on lip 302 in the axial direction. The axial height of lip highlight location 308 may vary for a plurality of cross-sections. The location 310 of maximum radial distance is the point of maximum radial thickness in the cross-section. The radial distance of the location 310 of maximum distance may vary for a plurality of cross-sections. When the pods are designed so that when assembled together as shown in Figure 3, there are four wide cross-sections separated approximately 90 degrees from each other along the circumference and narrow cross-sections between the wide cross-sections. This design may be referred to as the claw-shaped design, as shown in Figure 3. However, the pods are not limited to the claw-shaped design, and a number of other pod designs may be used. As an example, the pods may be uniform in height, comprising a raised shape design. The shape of the pods may depend on the payload required, and may vary in order to suit the payload in use. In the claw-shaped design, each pod has a peak such that the assembly of four pods has a plurality of peaks 320, 322, 324, 326 and a corresponding plurality of troughs 321, 323, 325, 327. Specific values associated with each cross-section and location may be varied in accordance with desired pod size, desired aerodynamic characteristics, and other design parameters. Additionally, the number of peaks and troughs may vary depending on design parameters and desired air flow characteristics. In a preferred embodiment, the axial height of highlight 308 may be biased toward the troughs in order to reduce blockage of flow by the peaks in forward flight.

Adjusting the design of peaks 320, 322, 324, 326 and troughs 321, 323, 325, 327 may be useful for adjusting the center of gravity of a ducted fan UAV. The center of gravity, as well as the control authority, need to be maintained on a UAV. Pods 300 are arranged and designed to maintain both the center of gravity and the control authority. Control vanes 130 need control authority in order to properly direct the vehicle and maintain an upright position during flight.

The internal lip portion 304 is the portion of the lip that extends from lip highlight location 308 to the location 312 where pod 300 is attached to the duct. The shape of the internal lip portion 304 is defined by the curve between locations 308 and 312. When pod 300 is attached to the core UAV, location 312 is preferably flush with the duct wall, so that internal lip portion 304 becomes integral with the duct wall. Internal lip portion 304 may be inset to accommodate the wall of duct portion 150.

The external lip portion 306 extends from the lip highlight location 308 to the location 310 of maximum radial thickness. The shape of the external lip portion 306 is defined by the curve between locations 308 and 310.

Figure 4a is a perspective view of the ducted fan core of Figure 1 in the operating position. Figure 4b shows a side view of the ducted fan core of Figure 4a. In Figure 4a, pods 200 are attached to first surface 112 of frame 110. In addition to the attachment of the pods to first surface 112, engine supports 190 may provide further attachment support. For example, each of engine supports 190 may comprise a butterfly lock 191 that slides into corresponding grooves on each pod and latches to lock each pod into place during flight. Alternatively, pins or a variety of other support or locking mechanisms may be used. Additionally, landing feet 192 have been attached to the plurality of engine supports 190. Landing feet 192 serve to raise the UAV from the ground, enabling control vanes 130 to move so that the vehicle may be prepared for take off. Landing feet 192 also serve to land the vehicle once the vehicle has reached its final destination, protecting the parts that make up the core of the vehicle. Landing feet 192 may be removably attached to plurality of engine supports 190. Alternatively, landing feet 192 may be attached to another part of ducted fan core 100.

An antenna 128 may lie within antenna holder 126, and may allow the UAV to receive and transmit signals. Unmanned aerial vehicle may be remotely controlled, or may be self-controlled for a particular journey. Once the vehicle has launched, control vanes 130 receive signals to control the direction of flight. Control vanes 130 move in response to the signals, altering the course of airflow from fan 140, which guides the direction of flight for the vehicle. As the UAV flies, air contacts leading edge 210 of pods 200, flowing around the surface of each pod. Once the vehicle has reached its final destination (e.g. returned to base), landing feet 192 contact the ground. The pods 200 may then be removed and the payloads may be unloaded. The pods that were removed may then be re-attached to first surface 112 of frame 110. Alternatively, new pods may be attached to first surface 112 of frame 110.

## Claims

1. An unmanned air vehicle(100) comprising:
a frame (110) including a first surface (112);
an engine (120) mounted to the frame (110);
a duct portion (150) attached to the frame (110);
a fan (140) mounted within the duct portion (150);
a plurality of control vanes (130) mounted to the frame (110); and at least one removable payload pod (200) having an interior, wherein the interior comprises a payload
**characterised in that**:
the at least one removable payload pod (200) includes an outer shell (214) and a leading edge, the outer shell (214) comprising:
an external surface;
an internal surface;
a pod base;
wherein the pod base comprises a plurality of attachments and is removably attachable to the frame on the unmanned air vehicle; and wherein a portion of the internal surface of the outer shell (214) is flush with the duct portion (150) such that the at least one removable payload pod (200) is integral with the duct portion (150).

2. The unmanned air vehicle of claim 1, wherein the leading edge forms a convex curve.

3. The unmanned air vehicle of claim 1, wherein when the at least one removable payload pod (200) is affixed to the frame (110) it forms an exterior portion of the unmanned aerial vehicle (100).

4. The unmanned air vehicle of claim 1, wherein air is guided along the internal surface of the outer shell (214).

5. The unmanned air vehicle of claim 1, wherein the internal surface of the outer shell (214) is shaped so that air flows downward along the internal surface and strikes the fan (140).

6. The unmanned air vehicle of claim 1, wherein the pod base is attached to the first surface (112).

7. The unmanned air vehicle of claim 1, wherein the first surface (112) includes a plurality of attachments that comprise gas connects.

8. The unmanned air vehicle of claim 1, wherein the first surface (112) includes a plurality of attachments that comprise electric connects.

9. The unmanned air vehicle of claim 1, wherein the payload of the at least one removable payload pod (200) comprises at least one camera.

10. The unmanned air vehicle of claim 1, wherein the payload of the at least one removable payloadpod (200) comprises fuel.

## Patentansprüche

1. Unbemanntes Luftfahrzeug (100), das Folgendes umfasst:
einen Rahmen (110), der eine erste Oberfläche (112) umfasst;
eine Maschine (120), die an dem Rahmen befestigt ist (110);
einen Rohrabschnitt (150), der an dem Rahmen (110) angebracht ist;
einen Bläser (140), der innerhalb des Rohrabschnitts (150) befestigt ist;
eine Mehrzahl von Steuerflügeln (130), die am Rahmen (110) befestigt sind; und mindestens eine abnehmbare Nutzlastgondel (200), die einen Innenraum aufweist, wobei der Innenraum eine Nutzlast enthält;
**dadurch gekennzeichnet, dass**
die mindestens eine abnehmbare Nutzlastgondel (200) eine äußere Hülle (214) und eine Vorderkante umfasst, wobei die äußere Hülle (214) Folgendes umfasst:
eine externe Oberfläche;
eine interne Oberfläche;
einen Gondelboden;
wobei der Gondelboden eine Mehrzahl von Anbauteilen umfasst und abnehmbar an dem Rahmen an dem unbemannten Luftfahrzeug angebracht ist; und wobei ein Abschnitt der internen Oberfläche der äußeren Hülle (214) mit dem Rohrabschnitt (150) bündig ist, so dass die mindestens eine abnehmbare Nutzlastgondel (200) mit dem Rohrabschnitt (150) einteilig ausgebildet ist.

2. Unbemanntes Luftfahrzeug nach Anspruch 1, wobei die Vorderkante einen konvexen Bogen formt.

3. Unbemanntes Luftfahrzeug nach Anspruch 1, wobei die mindestens eine abnehmbare Nutzlastgondel (200) einen Außenabschnitt des unbemannten Luftfahrzeugs (100) bildet, wenn sie an dem Rahmen (110) befestigt ist.

4. Unbemanntes Luftfahrzeug nach Anspruch 1, wobei Luft entlang der internen Oberfläche der äußeren Hülle (214) geführt wird.

5. Unbemanntes Luftfahrzeug nach Anspruch 1, wobei die interne Oberfläche der äußeren Hülle (214) so geformt ist, dass Luft nach unten entlang der inneren Oberfläche strömt und auf den Bläser (140) trifft.

6. Unbemanntes Luftfahrzeug nach Anspruch 1, wobei der Gondelboden an der ersten Oberfläche (112) angebracht wird.

7. Unbemanntes Luftfahrzeug nach Anspruch 1, wobei die erste Oberfläche (112) eine Mehrzahl von Anbauelementen umfasst, die Gasanschlüsse umfassen.

8. Unbemanntes Luftfahrzeug nach Anspruch 1, wobei die erste Oberfläche (112) eine Mehrzahl von Anbauelementen umfasst, die elektrische Anschlüsse umfassen.

9. Unbemanntes Luftfahrzeug nach Anspruch 1, wobei die Nutzlast der mindestens einen abnehmbaren Nutzlastgondel (200) mindestens eine Kamera umfasst.

10. Unbemanntes Luftfahrzeug nach Anspruch 1, wobei die Nutzlast der mindestens einen abnehmbaren Nutzlastgondel (200) Treibstoff umfasst.

## Revendications

1. Véhicule aérien sans pilote (100), comprenant :
un châssis (110) comportant une première surface (112) ;
un moteur (120) monté sur le châssis (110) ;
un segment de carénage (150) fixé au châssis (110) ;
une soufflante (140) montée à l'intérieur du segment de carénage (150) ;
une pluralité d'aubes de commande (130) montées sur le châssis (110) ; et
au moins une nacelle de charge utile amovible (200) présentant un intérieur, l'intérieur comprenant une charge utile ;
**caractérisé en ce que** :
ladite au moins une nacelle de charge utile amovible (200) comporte un coque extérieure (214) et un bord d'attaque, la coque extérieure (214) comprenant :
une surface externe ;
une surface interne ;
une base de nacelle ;
la base de nacelle comprenant une pluralité de fixations et étant susceptible d'être fixée de façon amovible au châssis sur le véhicule aérien sans pilote ; et
une partie de la surface interne de la coque extérieure (214) affleurant le segment de carénage (150) de sorte que ladite au moins une nacelle de charge utile amovible (200) fait partie intégrante du segment de carénage (150).

2. Véhicule aérien sans pilote selon la revendication 1, dans lequel le bord d'attaque forme une courbe convexe.

3. Véhicule aérien sans pilote selon la revendication 1, dans lequel, lorsque ladite au moins une nacelle de charge utile amovible (200) est assujettie au châssis (110), elle forme une partie extérieure du véhicule aérien sans pilote (100).

4. Véhicule aérien sans pilote selon la revendication 1, dans lequel de l'air est guidé le long de la surface interne de la coque extérieure (214).

5. Véhicule aérien sans pilote selon la revendication 1, dans lequel la surface interne de la coque extérieure (214) est pourvue d'une forme amenant l'air à s'écouler vers le bas le long de la surface interne et à percuter la soufflante (140).

6. Véhicule aérien sans pilote selon la revendication 1, dans lequel la base de nacelle est fixée à la première surface (112).

7. Véhicule aérien sans pilote selon la revendication 1, dans lequel la première surface (112) comporte une pluralité de fixations comprenant des raccords de gaz.

8. Véhicule aérien sans pilote selon la revendication 1, dans lequel la première surface (112) comporte une pluralité de fixations comprenant des raccords électriques.

9. Véhicule aérien sans pilote selon la revendication 1, dans lequel la charge utile de ladite au moins une nacelle de charge utile amovible (200) comprend au moins une caméra.

10. Véhicule aérien sans pilote selon la revendication 1, dans lequel la charge utile de ladite au moins une nacelle de charge utile amovible (200) comprend du carburant.
